# EUROPÄISCHE PATENTSCHRIFT

(11) **EP 3 400 769 B1**
(45) Veröffentlichungstag und Bekanntmachung des Hinweises auf die Patenterteilung: **07.05.2025**
(21) Anmeldenummer: 18163860.2
(22) Anmeldetag: 26.03.2018
(51) Int. Cl.: A01B 71/02

(54) **LANDWIRTSCHAFTLICHE ARBEITSMASCHINE SOWIE VERFAHREN ZUM BETREIBEN EINER LANDWIRTSCHAFTLICHEN ARBEITSMASCHINE**
AGRICULTURAL MACHINE AND METHOD FOR OPERATING AN AGRICULTURAL MACHINE
MACHINE DE TRAVAIL AGRICOLE ET PROCÉDÉ DE FONCTIONNEMENT D'UNE MACHINE DE TRAVAIL AGRICOLE

(30) Priorität: 10.05.2017 DE 102017110045
(43) Veröffentlichungstag der Anmeldung: 14.11.2018
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Ehlert, Christian, 33719 Bielefeld (DE); Meyer, Lennart, 52062 Aachen (DE); Rüther, Friedrich, 33330 Gütersloh (DE); Noyer, Pierre, 81739 München (DE)
(74) Vertreter: CLAAS Gruppe

(56) Entgegenhaltungen:
- EP-A1- 2 803 254
- EP-A2- 2 574 798
- WO-A1-2018/098238
- US-A- 5 887 669
- US-A- 6 061 617
- US-A1- 2002 157 712
- US-A1- 2014 298 228
- ANONYMOUS: "FENDT 720, 722, 724 Vario", FENDT 700 SERIES OPERATOR'S MANUAL, 1 June 2011 (2011-06-01), pages 3PP, 61, 109, 118, 179 - 180, 195,, XP055489300

## Beschreibung

Die vorliegende Erfindung betrifft eine landwirtschaftliche Arbeitsmaschine gemäß dem Oberbegriff des Anspruches 1 sowie ein Verfahren zum Betreiben einer landwirtschaftlichen Arbeitsmaschine gemäß dem Oberbegriff des Anspruches 8.

Landwirtschaftliche Arbeitsmaschinen werden in Verbindung mit Arbeitsgeräten beispielsweise im Bereich der Bodenbearbeitung, zum Säen und Pflanzen, zum Ausbringen von Pflanzenschutzmitteln oder Dünger sowie zum Ausbringen von Gülle oder Festmist betrieben. Dabei werden einige Komponenten der Arbeitsgeräte oftmals hydraulisch angetrieben bzw. durch Hydraulikzylinder betätigt. Der hierfür notwendige hydraulische Versorgungsdruck wird von der landwirtschaftlichen Arbeitsmaschine bereitgestellt. Diese weist ein hydraulisches Steuerungssystem auf, welches Ventile ansteuert. Von den Hydraulikventilen führen Hydraulikleitungen zu Anbauräumen der Arbeitsmaschine, in denen Maschinenanschlüsse angeordnet sind, die jeweils paarweise einem Hydraulikventil zugeordnet sind. Das Arbeitsgerät verfügt über Gegenanschlüsse, mit denen das Arbeitsgerät zur Ansteuerung eines hydraulisch betätigten Verstellelementes an die Maschinenanschlüsse verbindbar ist. Eine Bedieneinheit, die Ein- und Ausgabemittel umfasst und mit dem Steuerungssystem signaltechnisch verbunden ist, dient dazu, das Steuerungssystem zu bedienen.

Es ist dabei erforderlich, die Funktionen der Maschinenanschlüsse und der Eingabemittel der Bedieneinheit aufeinander abzustimmen. Um Fehlfunktionen am Arbeitsgerät zu vermeiden, ist eine eindeutige Zuordnung der Schnittstelle, also der hydraulischen oder elektrischen Maschinenanschlüsse zu den einzelnen auf dem Fahrerstand angeordneten Eingabemitteln eine zwingende Voraussetzung. Eine Bedienperson muss sich nach dem Anschließen des Arbeitsgerätes absolut sicher sein, dass durch eine Betätigung eines bestimmten Eingabemittels der Bedieneinheit an dem Arbeitsgerät eine bestimmte Verstellfunktion ausgelöst wird.

Eine landwirtschaftliche Arbeitsmaschine mit einem hydraulischen Steuerungssystem, welches Ventile der Arbeitsmaschine ansteuert, denen jeweils ein Paar Maschinenanschlüsse zugeordnet sind, an die zumindest ein Arbeitsgerät mit Gegenanschlüssen zur Ansteuerung eines hydraulisch betätigten Verstellelementes anschließbar ist, sowie mit einer Bedieneinheit, die Ein- und Ausgabemittel umfasst und die mit dem Steuerungssystem signaltechnisch verbunden ist, ist aus der EP 2 574 798 A2 sowie der US 6,061,617 A bekannt. Weitere landwirtschaftliche Arbeitsmaschinen sind z.B. aus US 2002/157712 A1 und EP 2 803 254 A1 bekannt.

Aufgabe der vorliegenden Erfindung ist es, eine landwirtschaftliche Arbeitsmaschine mit einem hydraulischen Steuerungssystem weiterzuentwickeln, dessen Bedienung einfacher und komfortabler ist, wobei Zuordnungsfehler sicher vermieden werden können.

Diese Aufgabe wird erfindungsgemäß durch die Merkmale des Vorrichtungsanspruches 1 sowie den Verfahrensanspruch 8 gelöst.

Vorteilhafte Weiterbildungen der Erfindung sind Gegenstand der Unteransprüche. Gemäß dem Anspruch 1 wird eine landwirtschaftliche Arbeitsmaschine mit einem hydraulischen Steuerungssystem vorgeschlagen, welches Ventile der Arbeitsmaschine ansteuert. Den Ventilen der Arbeitsmaschine sind in Anbauräumen der Arbeitsmaschine jeweils Maschinenanschlüsse zugeordnet. An die Maschinenanschlüsse ist zumindest ein Arbeitsgerät mit Gegenanschlüssen zur Ansteuerung eines hydraulisch betätigten Verstellelementes des Arbeitsgerätes anschließbar. Die Arbeitsmaschine umfasst eine Bedieneinheit, die Ein- und Ausgabemittel aufweist. Die Bedieneinheit ist mit dem Steuerungssystem signaltechnisch verbunden. Der Begriff Eingabemittel umfasst dabei jedwede Form eines manuell betätigbaren Bedienelementes, welches zur Übermittlung eines Steuerbefehls an das Steuerungssystem eingerichtet ist. So kann das Eingabemittel eine Konsole mit einem oder mehreren Hebeln und/oder Schaltern und/oder eine Tastatur umfassen, ebenso wie beispielsweise eine Anzeigevorrichtung, welche über ein separates Tastenfeld verfügt oder berührungssensitiv ausgeführt ist. Zur Verbesserung und Vereinfachung der Bedienung ist vorgesehen, dass das hydraulische Steuerungssystem derart ausgebildet ist, dass jeweils einem Ventil unmittelbar eine hydraulische Funktion des zumindest einen angeschlossenen Arbeitsgerätes, die durch das Verstellelement ausführbar ist, sowie zumindest ein Bedienelement der Bedieneinheit zugeordnet ist, wobei diese Zuordnungen abrufbar in einem Datenspeicher der Arbeitsmaschine hinterlegt sind. Die Hinterlegung der für die Arbeitsgeräte spezifischen Zuordnungen im Datenspeicher kann in Form einfacher Tabellen erfolgen. Denkbar ist auch die Hinterlegung dieser Daten in einer im Datenspeicher hinterlegten Datenbank. Die abrufbare Zuordnung eines Bedienelementes zu einem Ventil führt zu einer Entlastung einer Bedienperson, da diese die Zuordnung nicht selbsttätig vornehmen muss. Zudem wird die Gefahr von Fehlbedienungen reduziert, da jedem Ventil bereits eine auszuführende hydraulische Funktion zugeordnet ist. Der Abruf der entsprechenden Zuordnungen für das angeschlossene Arbeitsgerät erfolgt durch die Eingabe beziehungsweise Auswahl der Arbeitsgeräteklasse. So kann in dem Datenspeicher eine hierarchisch gegliederte Struktur hinterlegt sein, welche ausgehend von einem übergeordneten Gattungsbegriff auf unterschiedliche Arbeitsaufgaben verzweigt. Die Gattungsbegriffe charakterisieren verschiedene Anwendungsgebiete, auf denen die landwirtschaftliche Arbeitsmaschine und das daran angeschlossene Arbeitsgerät verwendet werden. Als Gattungsbegriffe kommen beispielsweise Ackerbau, Futtermittelanbau, Transport oder dergleichen in Betracht. Die Arbeitsaufgaben führen unterhalb eines Gattungsbegriffs zu einer weiteren Differenzierung. Unterhalb der jeweiligen Arbeitsaufgabe finden sich Arbeitsgeräteklassen. Für eine weitere Verfeinerung können innerhalb der Auflistung von Arbeitsgeräteklassen Arbeitsgerätetypen herstellerspezifisch aufgelistet sein. Das Abrufen beziehungsweise das Vorschlagen der Funktionsbelegung der Ventile der Arbeitsmaschine sowie die Belegung der Bedienelemente kann dabei in Verbindung mit der Eingabe einer Arbeitsaufgabe und/oder eines Arbeitsgerätes erfolgen. Hierfür können für die unterschiedlichen Arbeitsaufgaben bzw. Arbeitsgeräteklassen unterschiedliche Belegungsprofile hinterlegt sein, die der Bedienperson aufgrund einer getätigten Eingabe vorgeschlagen werden. Vorteilhaft ist dabei, dass der Bedienperson durch das Ausgabemittel, das insbesondere als ein Bildschirm oder ein Displayterminal ausgeführt sein kann, darstellbar ist, welche Funktion durch welches Bedienelement angesteuert wird.

Hierbei ist das Steuerungssystem erfindungsgemäß dazu eingerichtet, die Zuordnungen in Abhängigkeit von Funktionsmerkmalen des angeschlossenen Arbeitsgerätes vorzunehmen. Die Funktionsmerkmale eines Arbeitsgerätes bilden die unterschiedlichen hydraulischen Funktionen ab, denen ein spezifisches Bedienelement der Bedieneinheit zugeordnet werden kann. So bedürfen einzelne hydraulische Funktionen lediglich zweier Schaltstellungen, die vorteilhaft durch ein als Schalter oder dergleichen ausgebildetes Bedienelement darstellbar sind. Beispielhaft hierfür ist das Ein- und Ausklappen eines Arbeitsgerätes für einen Wechsel zwischen Feld- und Straßenfahrt zu nennen. Hingegen bedarf die Veränderung der Arbeitsbreite oder das Verändern des Drucks eines Traktionsverstärkers des Arbeitsgerätes einer zumindest schrittweisen oder stufenlosen Anpassung, welche sich vorteilhafter durch einen Schiebe- oder Drehregler oder dergleichen realisieren lässt. Die Ansteuerung eines Verstellelementes des Arbeitsgerätes, welche eine schwenkende oder drehende Bewegung um eine Achse zur Folge hat, kann besonders gut durch einen Bedienhebel mit mehreren Freiheitsgraden, wie einen Joystick, erfolgen.

Dabei kann das Steuerungssystem dazu eingerichtet sein, die hinterlegten Zuordnungen eines angeschlossenen Arbeitsgerätes durch Eingaben, die von der Bedieneinheit an eine Steuerungsvorrichtung übermittelt werden, zu manipulieren. Dies erlaubt es einer Bedienperson, eine bereits hinterlegte Zuordnung individuell an ihre Bedürfnisse anzupassen und abzuspeichern. Bevorzugt lassen sich die angepassten Zuordnungen individuell in dem Datenspeicher abspeichern, um diese bei Bedarf zu einem späteren Zeitpunkt wieder abrufen zu können. Besonders bevorzugt sind diese individuell angepassten Zuordnungen personalisierbar. Dies ist vorteilhaft, wenn verschiedene Bedienpersonen die Arbeitsmaschine nutzen.

In bevorzugter Ausführung kann vorgesehen sein, dass die Bedieneinheit dazu eingerichtet ist, die von dem Steuerungssystem vorgenommene Zuordnung der hydraulischen Funktion durch ein Symbol zu visualisieren ist. Die hydraulische Funktion wird durch ein individuelles Symbol dargestellt. Das Symbol kann in Anlehnung an die Funktion gestaltet sein, so dass die Bedienperson aus der Darstellung des Symbols auf die dem Ventil zugeordnete Funktion rückschließen kann.

Insbesondere kann die Bedieneinheit dazu eingerichtet sein, eine dem jeweiligen Bedienelement zugeordnete Teilfunktion durch ein Symbol zu visualisieren. Der Begriff Teilfunktion beschreibt eine einzelne spezifische Ansteuerung des Verstellelementes respektive des zugeordneten Ventils durch das Steuerungssystem, hervorgerufen durch eine Betätigung des Bedienelementes oder eines der Bedienelemente. Die Bedienperson kann anhand des der Teilfunktion zugeordneten Symbols auf einen Blick erkennen, welches Bedienelement welche Teilfunktion des Arbeitsgerätes ansteuert. Hierdurch lässt sich einer Fehlbedienung effektiv begegnen.

Des Weiteren kann das Steuerungssystem dazu eingerichtet sein, eine Zuordnung einer hydraulischen Funktion zu einem Ventil und zumindest eines Bedienelementes zu einem Ventil in Abhängigkeit von durch die Bedieneinheit empfangene Eingaben durchzuführen. Dies eröffnet der Bedienperson die Möglichkeit, eine aufgrund der Art bzw. des Modells des Arbeitsgerätes gewählte Zuordnung zu übersteuern. Dies kann erforderlich werden, wenn die tatsächliche Zuordnung der Maschinenanschlüsse und der Gegenanschlüsse mit der gewählten Zuordnung nicht korrespondiert.

Erfindungsgemäß ist das Steuerungssystem dazu eingerichtet, für ein Arbeitsgerätemodell des angeschlossenen Arbeitsgerätes im Datenspeicher hinterlegte spezifische Sequenzen, die landwirtschaftliche Prozessschritte durch zeit- und/oder wegabhängige Leistungsverläufe definieren, auszuführen. Sequenzen werden bevorzugt bei häufig wiederkehrenden Prozessschritten verwendet, welche eine Anpassung von Betriebsparametern des Arbeitsgerätes erforderlich machen. Derartige Sequenzen werden beispielsweise bei Fahrten im Vorgewende genutzt, um die Abfolge der Prozessschritte zu automatisieren. Hierzu können verschiedene Sequenzen in Form von allgemeinen Vorlagen hinterlegt sein, die für zumindest ein Arbeitsgerätemodell gültig sind. Die zeit- und/oder wegabhängigen Leistungsverläufe beschreiben dabei die Ansteuerung der Verstellelemente des Arbeitsgerätes während der einzelnen Prozessschritte.

Erfindungsgemäß ist das Steuerungssystem dazu eingerichtet, die zeit- und/oder wegabhängigen Leistungsverläufe einer hinterlegten Sequenz durch Eingaben, die von der Bedieneinheit empfangen werden, zu manipulieren. Dies erlaubt es der Bedienperson, eine als Vorlage hinterlegte Sequenz an eine tatsächliche Abfolge der Prozessschritte anzupassen. Im einfachsten Fall werden lediglich die Ausführungszeiten der Leistungsverläufe an die individuelle Betriebssituation von Arbeitsmaschine und Arbeitsgerät angepasst. Darüber hinaus sind Anpassungen der Leistungsverläufe ebenso denkbar wie das Hinzufügen weiterer zeit- und/oder wegabhängiger Leistungsverläufe.

Erfindungsgemäß ist das Steuerungssystem dazu eingerichtet, eine Sequenz für ein Arbeitsgerät anhand von durch die Bedieneinheit übermittelte Eingaben aufzuzeichnen und im Datenspeicher abrufbar zu hinterlegen. Hierdurch wird der Bedienperson die Möglichkeit gegeben, individuelle Sequenzen für ein spezifisches Arbeitsgerät neu zu erstellen und diese in dem Datenspeicher abrufbar zu hinterlegen.

Eine Weiterbildung sieht vor, dass das Steuerungssystem dazu eingerichtet ist, bei Auswahl eines angeschlossenen Arbeitsgeräts durch eine Eingabe mittels der Bedieneinheit einen Dialog zu eröffnen, welcher die für das angeschlossene Arbeitsgerät hinterlegten Zuordnungen durch das Ausgabemittel der Bedieneinheit zur Verifizierung ausgibt. Die Bedienperson hat dadurch die Möglichkeit, die tatsächlich vorgenommene Anschlussbelegung mit der hinterlegten Zuordnung der Funktionen gemäß der getroffenen Auswahl zu vergleichen. Dies erlaubt eine einfache Überprüfung der Korrektheit der Anschlussbelegung, bevor die Bedienperson die ausgewählten Zuordnungen bestätigen muss.

Eine bevorzugte Ausführung sieht vor, dass das Steuerungssystem dazu eingerichtet ist, durch eine mittels der Bedieneinheit getätigte Eingabe einen Dialog zu eröffnen, durch welchen der Arbeitsgeräteklasse des angeschlossenen Arbeitsgerätes individuell erfasst wird und die Zuordnung einer hydraulischen Funktion zu einem Ventil sowie die Zuordnung zumindest eines Bedienelements zu diesem Ventil durchführt wird. Diese Ausgestaltung bietet der Bedienperson eine höhere Flexibilität. Auf diese Weise kann für Arbeitsgeräte, für die es keine geeigneten Zuordnungen zumindest einer hydraulischen Funktion unmittelbar zu einem Ventil gibt, eine solche Zuordnung durch die Bedienperson erstellt werden, die anschließend im Datenspeicher abrufbar hinterlegbar ist.

Weiterhin betrifft die vorliegende Erfindung ein Verfahren zum Betreiben einer landwirtschaftlichen Arbeitsmaschine mit einem hydraulischen Steuerungssystem, durch welches Ventile der Arbeitsmaschine angesteuert werden, denen jeweils ein Paar Maschinenanschlüsse zugeordnet sind, an die zumindest ein Arbeitsgerät mit Gegenanschlüssen zur Ansteuerung eines hydraulisch betätigten Verstellelementes angeschlossen wird, sowie mit einer Bedieneinheit, die Ein- und Ausgabemittel umfasst und das mit dem Steuerungssystem signaltechnisch verbunden ist, wobei durch Auswahl eines Arbeitsgerätes jeweils einem Ventil unmittelbar eine hydraulische Funktion des zumindest einen angeschlossenen Arbeitsgerätes, die durch das Verstellelement ausgeführt wird, sowie zumindest ein Bedienelement der Bedieneinheit zugeordnet wird, wobei diese Zuordnungen aus einem Datenspeicher der Arbeitsmaschine abgerufen werden, wobei das Steuerungssystem die Zuordnungen in Abhängigkeit von Funktionsmerkmalen des angeschlossenen Arbeitsgerätes vornimmt, wobei das Steuerungssystem für ein Anbaugerätemodell des angeschlossenen Arbeitsgerätes im Datenspeicher hinterlegte spezifische Sequenzen, die landwirtschaftliche Prozessschritte durch zeit- und/oder wegabhängige Leistungsverläufe definieren, ausführt, wobei das Steuerungssystem die zeit- und/oder wegabhängigen Leistungsverläufe einer hinterlegten Sequenz durch Eingaben, die von der Bedieneinheit empfangen werden, manipuliert, wobei das Steuerungssystem eine Sequenz für ein Arbeitsgerät anhand von durch die Bedieneinheit übermittelte Eingaben aufzeichnet und im Datenspeicher abrufbar hinterlegt.

Die vorliegende Erfindung wird nachstehend anhand eines in den Zeichnungen dargestellten Ausführungsbeispieles näher erläutert.

Es zeigen:
- Fig. 1: eine schematische Ansicht einer als Traktor ausgeführten landwirtschaftlichen Arbeitsmaschine;
- Fig. 2: eine schematische Darstellung einer Anzeige auf einem Display einer Bedieneinheit der Arbeitsmaschine die Zuordnung hydraulischer Funktionen betreffend;
- Fig. 3: eine schematische Darstellung einer Anzeige auf dem Display der Bedieneinheit der Arbeitsmaschine die Zuordnung von Bedienelementen betreffend;
- Fig. 4: eine schematische Darstellung einer Anzeige auf dem Display eine automatisiert durchführbare Sequenz betreffend.

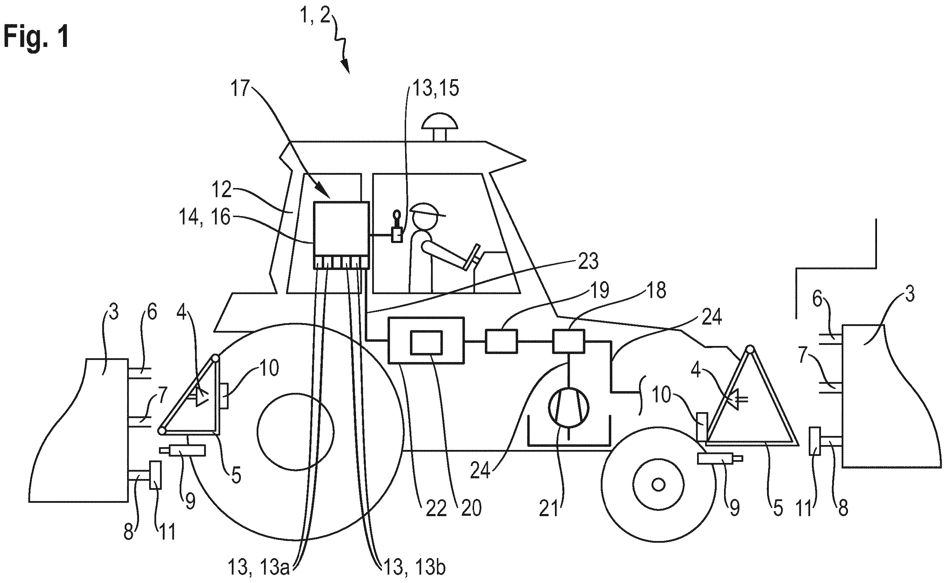

Fig. 1 zeigt eine schematische Darstellung einer als Traktor 2 ausgeführten landwirtschaftlichen Arbeitsmaschine 1, welche in ihrem rückwärtigen Bereich in an sich bekannter Weise ein landwirtschaftliches Arbeitsgerät 3, wie beispielsweise einen Pflug, eine Heuwerbungsmaschine oder ein Mähwerk aufnimmt. In analoger Weise kann ein landwirtschaftliches Arbeitsgerät 3 auch im Front- und/oder Seitenbereich der landwirtschaftlichen Arbeitsmaschine 1 an dieses angebracht sein. In der Regel kann das landwirtschaftliche Arbeitsgerät 3 entweder über ein sogenanntes Zugmaul 4 oder den Dreipunktanbau 5 von dem Traktor 2 aufgenommen werden, wobei die landwirtschaftliche Arbeitsmaschine 1 je nach Ausstattungsgrad front- und/oder heckseitig über ein Zugmaul 4 und einen entsprechenden Dreipunktanbau 5 verfügen kann. Weiterhin kann das Arbeitsgerät 3 durch ein Zugpendel, eine Zugzapfenkupplung (piton fix), eine Kugelkopfkupplung, einen Hitchhaken oder dergleichen mehr mit dem Traktor verbunden werden. Die an die Arbeitsmaschine 1 anzuordnenden Arbeitsgeräte 3 führen verschiedenste Arbeitsfunktionen aus, wobei die zur Durchführung dieser Arbeitsfunktionen erforderlichen Arbeitsorgane der Arbeitsgeräte 3 hydraulisch und/oder elektrisch und/oder mechanisch angetrieben werden. Die jeweils erforderliche Antriebsenergie wird durch Versorgungsstränge 6 - 8 von der jeweiligen Arbeitsmaschine 1 bereitgestellt. In an sich bekannter Weise kann dabei die Übertragung mechanischer Antriebsenergie durch eine Kopplung eines arbeitsgeräteseitigen Antriebsstranges 6 mit der jeweiligen Zapfwelle 9 der Arbeitsmaschine 1 bewirkt werden. Elektrische Energie wird in der Regel mittels elektrischer Leitungen 7 zwischen Arbeitsmaschine 1 und Arbeitsgerät 3 übertragen. Hydraulische Antriebsenergie wird in der Regel durch mehrere Hydraulikleitungen 8 zwischen Maschinenanschlüssen der Arbeitsmaschine 1 und korrespondierenden Gegenanschlüssen des der Arbeitsmaschine 1 zugeordneten Arbeitsgerätes 3 übertragen. Zur Vereinfachung des Koppelvorganges der Hydraulikleitungen 8 mit der Arbeitsmaschine 1 verfügt die Arbeitsmaschine 1 über ein, in Fig. 1 nur schematisch dargestelltes, mit der Arbeitsmaschine 1 verbundenes erstes Kupplungsteil 10, welches mit einem dem Arbeitsgerät 3 zugeordneten, alle Hydraulikleitungen 8 des Arbeitsgerätes 3 aufnehmenden, zweiten Kupplungsteil 11 gekoppelt werden kann. Das erste Kupplungsteil 10 und das zweite Kupplungsteil 11 bilden eine Kupplung zum Verbinden der Hydraulikleitungen 8. Die Anzahl der zu verbindenden Hydraulikleitungen 8 variiert in Abhängigkeit von der Art bzw. der Funktionsvielfalt des Arbeitsgeräts 3.

Der Traktor 1 weist einen als Fahrerkabine ausgebildeten Fahrerstand 12 auf, auf welchem ein mit Schaltern 13a oder Tastern, mit Schiebe- oder Drehreglern 13b versehenes Display 14 und ein als Joystick 15 ausgebildete Bedienelemente 13 angeordnet sind. Diese Bedienelemente 13, die Schalter 13a, die Schiebe- oder Drehregler 13b, das Display 14 und der Joystick 15 bilden Ein- und Ausgabemittel 16 einer Bedieneinheit 17. Die Bedieneinheit 17 kann weitere Bedienelemente 13 umfassen, die z.B. in Konsolen des Fahrerstands 12 angeordnet sind. Die Ein- und Ausgabemittel 16 stehen mit einem hydraulischen Steuerungssystem in Verbindung. Das hydraulische Steuerungssystem umfasst eine Steuereinrichtung 18, eine Geräteschnittstelle 19 zur Ansteuerung der Verstellfunktionen der Steuereinrichtung 18, einen Datenspeicher 20 sowie eine Druckmittelquelle 21. Die Steuereinrichtung 18 ist mit der Druckmittelquelle 21 durch eine Hydraulikleitung 24 verbunden und besteht vorzugsweise aus einem Block von mehreren hydraulischen Wegeventilen, die elektromagnetisch vorgesteuert sind. Das Steuerungssystem umfasst ferner eine Steuerungsvorrichtung 22, welche auch den Datenspeicher 20 umfassen kann, wie in der Fig. 1 dargestellt. Die Steuerungsvorrichtung 22 ist mit der Bedieneinheit 17 durch zumindest eine Signalleitung 23 verbunden.

Mittels des Steuerungssystems werden als Hydraulikzylinder ausgeführte Verstellelemente des jeweiligen angeschlossenen Arbeitsgerätes 3 angesteuert, um unterschiedliche Funktionen darzustellen. Dafür ist eine eindeutige Zuordnung der hydraulischen Wegeventile der Steuereinrichtung 18 zu den Verstellelementen des Arbeitsgerätes 3 erforderlich, welche sich aus der Zuordnung der Hydraulikleitungen 8 beim Koppeln der Kupplungsteile 10 und 11 mit den Hydraulikleitungen 24 ergibt.

Darüber hinaus wird jedem Wegeventil der Steuereinrichtung 18 zumindest eines der Bedienelemente 13 der Bedieneinheit 17 zugewiesen, um eine Ansteuerung des dem jeweiligen Wegeventil der Steuereinrichtung 18 zugewiesenen Verstellelementes durch eine Bedienperson des Traktors 2 zu ermöglichen. Der Typ und die Anzahl der dem jeweiligen Wegeventil zugewiesenen Bedienelemente 13 können sich dabei nach den Funktionsmerkmalen des Arbeitsgerätes 3 richten. Für ein Funktionsmerkmal des Arbeitsgerätes 3, welches nur zwei Stellungen des Verstellelementes vorsieht, ist eine Zuordnung der als Schalter oder Taster ausgeführten Bedienelemente 13a sinnvoll. Hingegen bedarf die Veränderung der Arbeitsbreite oder das Verändern des Drucks eines Traktionsverstärkers des Arbeitsgerätes 3 einer zumindest schrittweisen Anpassung, welche sich vorteilhafter durch einen Schiebe- oder Drehregler 13 oder dergleichen realisieren lässt. Die Ansteuerung eines Verstellelementes des Arbeitsgerätes 3, welche eine schwenkende oder drehende Bewegung um eine Achse zur Folge hat, kann besonders gut durch einen Bedienhebel mit mehreren Freiheitsgraden, wie dem Joystick 15, erfolgen.

Das Kupplungsteil 10 der Traktors 2 bildet für die Steuerungsvorrichtung 22 eine Systemgrenze. Die Steuerungsvorrichtung 22 erhält von dem Arbeitsgerät 3 keine Informationen darüber, welche Funktionen des angeschlossenen Arbeitsgerätes 3 von einem jeweiligen Wegeventil der Steuereinrichtung 18 angesteuert werden. Um diese Systemgrenze zu überwinden, ist vorgesehen, dass das hydraulische Steuerungssystem derart ausgebildet ist, dass jeweils einem Wegeventil der Steuereinrichtung 18 unmittelbar eine hydraulische Funktion sowie zumindest ein Bedienelement der Bedieneinheit 17 zugeordnet ist, wobei diese Zuordnungen als abrufbare Datensätze in dem Datenspeicher 20 der Arbeitsmaschine 1 hinterlegbar sind. Die Datensätze sind in einer in dem Datenspeicher 20 gespeicherten Datenbank hinterlegt.

Nachstehend wird von einer Betriebssituation ausgegangen, in welcher das Arbeitsgerät 3 bereits einmal mit dem Traktor 2 verbunden gewesen ist. Das heißt, es liegt ein abrufbarer Datensatz für das Arbeitsgerät 3 vor, der zumindest die Zuordnungen enthält. Die Bedienperson schließt das Arbeitsgerät 3 an den Traktor 2 an. Dabei werden unter anderem die hydraulischen Maschinenanschlüsse und die hydraulischen Gegenanschlüsse miteinander verbunden. Im Anschluss daran tritt die Bedienperson durch die Bedieneinheit 17 in einen Dialog mit der Steuerungsvorrichtung 18 des hydraulischen Steuerungssystems.

Die Bedienperson wählt das angeschlossene Arbeitsgerät 3 aus einer auf dem Display 14 darstellbaren Übersicht verschiedener Datensätze für verschiedene Arbeitsgeräte innerhalb einer gleichen Arbeitsgeräteklasse aus. Jeder Datensatz umfasst spezifische Informationen über die jeweilige Zuordnung einer hydraulischen Funktion zu einem Wegeventil der Steuereinrichtung 18 sowie dem zumindest einen Bedienelement 13 und dem Wegeventil. Mit der Auswahl des für das angeschlossene Arbeitsgerät 3 bereits hinterlegten spezifischen Datensatzes respektive der darin hinterlegten Zuordnungen kann in einem weiteren Dialogschritt die Bedienperson aufgefordert werden, diese Zuordnungen zu verifizieren, indem der korrekte hydraulische Anschluss des Arbeitsgerätes 3 an der Arbeitsmaschine 1 bestätigt wird.

Neben den Zuordnungen können weitere Informationen bzw. Daten für das Arbeitsgerät hinterlegt sein. Diese Daten umfassen hinterlegte, für das Arbeitsgerät 3 spezifische Sequenzen, die landwirtschaftliche Prozessschritte durch zeit- und/oder wegabhängige Leistungsverläufe definieren. Weiterhin können die Informationen auch spezifische Motorgetriebeeinstellungen für den Betrieb des jeweiligen Arbeitsgerätes 3 in Verbindung mit der Arbeitsmaschine 1 beinhalten, die an eine geeignete Steuereinheit übertragen werden.

Das Steuerungssystem ist dazu eingerichtet ist, die hinterlegten Zuordnungen eines angeschlossenen Arbeitsgerätes 3 aufgrund von durch die Bedieneinheit 17 übermittelten Eingaben zu manipulieren. Die Bedienperson erhält somit die Möglichkeit erforderlichenfalls Anpassungen der Zuordnungen vornehmen zu können. Dadurch können sowohl die einzelnen Zuordnungen der hydraulischen Funktion zu einem Wegeventil der Steuereinrichtung 18 sowie dem zumindest einen Bedienelement 13 und dem Wegeventil individuell angepasst und abgespeichert werden. Diese Anpassung kann auch benutzerspezifisch erfolgen, indem für verschiedene Bedienpersonen jeweils ein individuelles Profil hinterlegbar ist.

Darüber hinaus ist das Steuerungssystem dazu eingerichtet, Zuordnungen für ein Arbeitsgerät 3 in der Datenbank des Datenspeichers 20 zu erfassen, welches erstmalig mit der Arbeitsmaschine 1 verbunden wird. Hierzu tritt die Bedienperson mittels der Bedieneinheit 17 in einen geführten Dialog mit dem Steuerungssystem. In einem ersten Dialogschritt wird die Bedienperson dazu aufgefordert, die Arbeitsgeräteklasse, das heißt die Art des angeschlossenen Arbeitsgerätes 3, zu bestimmen. Anhand dieser Angabe werden mögliche hydraulische Funktionen des Arbeitsgerätes 3 aus in der Datenbank hinterlegten abgeleitet. Beispielhaft wird dies anhand eines der Bodenbearbeitung dienenden Pfluges als Arbeitsgerät 3 erläutert, welches an die Arbeitsmaschine 1 angeschlossen wird. Durch die Auswahl eines übergeordneten Gattungsbegriffs wird zwischen möglichen Einsatzbereichen des Arbeitsgerätes 3 unterschieden. Als Gattungsbegriffe kommen beispielsweise Ackerbau, Futterbau sowie Transport in Betracht. Im Fall des Pflugs als Anbaugerät handelt es sich um die Gattung Ackerbau. Unterhalb dieser Gattungsbegriffe wird auf unterschiedliche Arbeitsaufgaben verzweigt, die innerhalb der jeweiligen Gattung spezifisch sind. Innerhalb der Gattung Ackerbau können als Arbeitsaufgaben Bodenbearbeitung, Säen und Pflanzen, Pflanzenschutz und Düngung, Gülle- und Mistausbringung sowie Ernte definiert sein. Im Fall des Pflugs wird durch die Bedienperson in einem nächsten Dialogschritt als Arbeitsaufgabe Bodenbearbeitung ausgewählt.

Unterhalb der Arbeitsaufgabe werden Arbeitsgeräteklassen definiert, welche die Art der Arbeitsgeräte auflistet, welche für die Ausführung der jeweiligen Arbeitsaufgabe zur Anwendung kommen können. Die Arbeitsgeräteklasse Bodenbearbeitung umfasst beispielsweise Pflug, Grubber, Scheibenegge, Saatbeetkombination, Tiefenlockerer oder zapfwellengetriebene Bodenbearbeitungsgeräte als Arbeitsgeräte. In einem weiteren Dialogschritt wird der Pflug als Arbeitsgeräteklasse ausgewählt. Die Auswahl der Arbeitsgeräteklasse bestimmt die zur Verfügung stehenden hydraulischen Funktionen des angeschlossenen Arbeitsgerätes 3, die für diese Arbeitsgeräteklasse hinterlegt sind. Dabei handelt es zumindest sich um die hydraulischen Funktionen, die durch das ausgewählte Arbeitsgerät 3 grundsätzlich ausführbar sind. In einem weiteren Dialogschritt führt die Bedienperson eine Zuordnung der jeweiligen hydraulischen Funktion zu einem der Wegeventile der Steuereinrichtung 18 durch. Im Anschluss daran wird in einem nachfolgenden Dialogschritt von der Bedienperson das zur Ansteuerung des jeweiligen Wegeventils der Steuereinrichtung 18 zu betätigende Bedienelement 13 einer jeweiligen hydraulischen Funktion zugeordnet. Die Zuordnungen von hydraulischer Funktion zu einem Wegeventil sowie Bedienelement zu der hydraulischen Funktion wird in der in dem Datenspeicher 20 befindlichen Datenbank abrufbar für dieses Arbeitsgerät 3 hinterlegt. Wird zu einem späteren Zeitpunkt das als Pflug ausgebildete Arbeitsgerät 3 erneut an die Arbeitsmaschine 1 angeschlossen, wählt die Bedienperson das entsprechende Arbeitsgerät 3 erneut aus. Die zu einem früheren Zeitpunkt vorgenommenen Zuordnungen werden der Bedienperson auf dem Display 14 der Bedieneinheit angezeigt. Zur Inbetriebnahme muss die Bedienperson lediglich die Korrektheit der Zuordnungen bestätigen oder erforderlichenfalls anpassen, wie weiter oben bereits beschrieben wurde.

Die vorstehenden beispielhaften Aufzählungen zu den Gattungsbegriffen, den Arbeitsaufgaben sowie den Arbeitsgeräteklassen sind nicht abschließend zu verstehen.

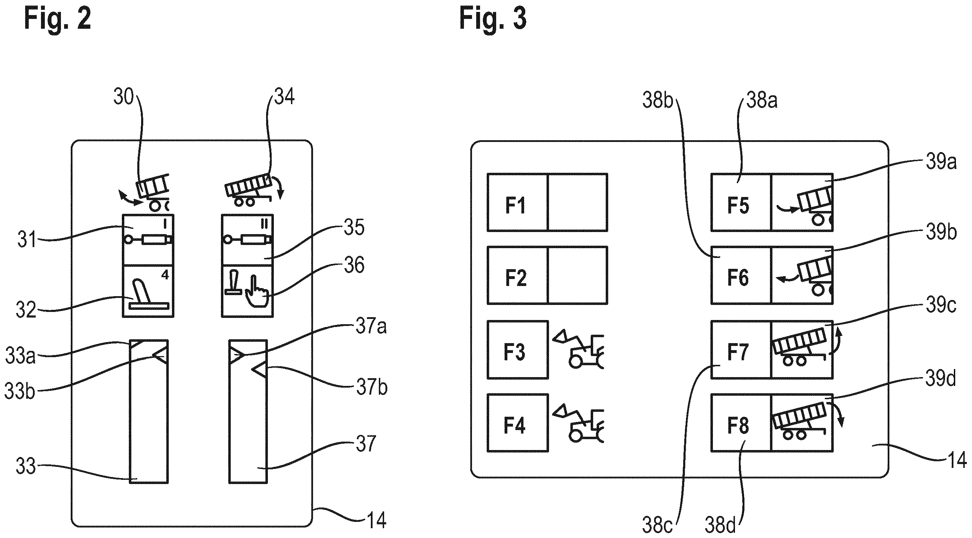

Die Darstellung in Fig. 2 zeigt eine schematische Darstellung einer Anzeige auf dem Display 14 der Bedieneinheit 17 der Arbeitsmaschine 1, welche die Zuordnung hydraulischer Funktionen betreffend. Fig. 2 veranschaulicht die Visualisierung einer durch die Bedienperson vorgenommenen oder von dieser ausgewählten Zuordnung zwischen einem der Wegeventile der Steuereinrichtung 18 und hydraulischen Funktionen, die durch ein anzusteuerndes Verstellelement des Arbeitsgerätes 3 ausgeführt werden sollen, wie sie auf dem Display 14 dargestellt wird. Mit Bezugszeichen 30 bzw. 34 sind auf dem Display dargestellte Symbole bezeichnet, welche die jeweilige hydraulische Funktion charakterisieren. Dabei beschreibt das Symbol 30 die hydraulische Funktion der Betätigung einer schwenkbaren heckseitigen Klappe eines Kippanhängers durch ein hydraulisch betätigtes Verstellelement. Das Symbol 34 beschreibt die hydraulische Funktion der Kippwinkelveränderung der Ladefläche durch ein hydraulisch betätigtes Verstellelement.

Symbole 31 bzw. 35 visualisieren das der jeweiligen hydraulischen Funktion zugeordnete Wegeventil der hydraulischen Steuereinrichtung 18. Das Symbol 31 bezeichnet das Wegeventil, dessen Ansteuerung zu einer Veränderung des Kippwinkels des Kippanhängers führt. Das Symbol 35 bezeichnet das Wegeventil, dessen Ansteuerung zu einer Betätigung des entsprechenden Verstellelementes führt. Mit den Bezugszeichen 32 bzw. 36 sind Symbole der den jeweiligen Wegeventilen der hydraulischen Steuereinrichtung 18 zugeordnete Bedienelemente 13 bezeichnet. Zu jedem der durch die Symbole 31 bzw. 35 visualisierten Wegeventile wird eine zugehörige Durchflussanzeige 33 bzw. 37 auf dem Display 14 dargestellt, welche die Durchflussmenge der Hydraulikölströme wiedergeben. Hierzu werden grafische Anzeigeelemente 33a, 33b bzw. 37a, 37b dargestellt, welche die jeweilige Durchflussmenge für die zwei Durchflussrichtungen des jeweiligen Hydraulikventils des entsprechenden Verstellelementes visualisieren.

Die Darstellung in Fig. 3 zeigt eine schematische Darstellung der Anzeige auf dem Display 14 der Bedieneinheit 17 der Arbeitsmaschine 1 die Zuordnung von Bedienelementen 13 betreffend. Fig. 3 veranschaulicht die Visualisierung der Zuordnung zwischen einer hydraulischen Teilfunktion und einem dieser zugeordneten Bedienelement 13. Mit Bezugszeichen 39a und 39b sind die Symbole bezeichnet, die die hydraulischen Teilfunktionen des Öffnens bzw. Schließens der schwenkbaren heckseitigen Klappe des Kippanhängers visualisieren, die durch die entsprechende Ansteuerung des zugeordneten Wegeventils, welches den Hydraulikzufluss zum Verstellelement am Kippanhänger steuert, bewirkt werden. Mit den Bezugszeichen 39c und 39d sind die Symbole bezeichnet, die die hydraulischen Teilfunktionen der Kippwinkelverstellung zum Aufstellen oder Absenken der Ladefläche des Kippanhängers visualisieren. Jeder der durch die Symbole 39a bis 39d visualisierten hydraulischen Teilfunktionen ist ein Bedienelement 13 zugeordnet, welche im dargestellten Ausführungsbeispiel als Funktionstasten 38a bis 38d ausgebildet sind. Anhand dieser Visualisierung der steuerungstechnischen Zusammenhänge lässt sich eine Fehlbedienung vermeiden.

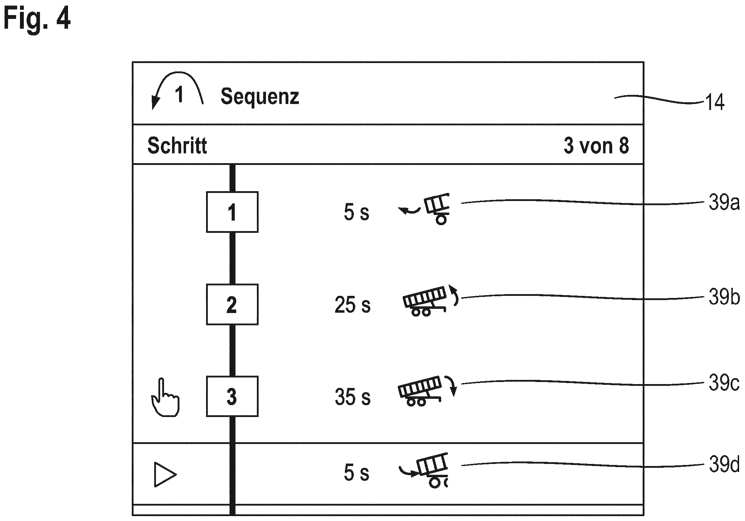

Fig. 4 zeigt eine Teilansicht einer auf dem Display 14 der Bedieneinheit 17 dargestellten, automatisiert ausführbaren Sequenz, die dem Arbeitsgerät 3 zugeordnet ist. Die Sequenz beinhaltet die Informationen über die Zuordnungen von hydraulischer Funktion zu einem Wegeventil der Steuereinrichtung 18 sowie des Bedienelements 13 zu der jeweiligen hydraulischen Funktion. Wie zuvor bereits beschreiben, ist das Arbeitsgerät 3 beispielhaft als ein Kippanhänger ausgeführt. Im Schritt 1 wird die hydraulische Teilfunktion des Schwenkens der heckseitigen Klappe, visualisiert durch das Symbol 39a, durch eine automatisierte Betätigung der Funktionstaste 38a dargestellt. Die Dauer dieser Betätigung wird durch eine Zeitangabe auf dem Display 14 dargestellt. Im Schritt 2 wird durch die automatische Betätigung der Funktionstaste 38b die hydraulische Teilfunktion des Aufstellens der Ladefläche, dargestellt durch das Symbol 39b, wiedergegeben. Im Schritt 3 wird die hydraulische Teilfunktion des Absenkens der Ladefläche des Kippanhängers, visualisiert durch das Symbol 39c, durch eine automatisierte Betätigung der Funktionstaste 38c dargestellt. Im nachfolgenden Schritt wird die hydraulische Teilfunktion des Schließens der heckseitigen Klappe, dargestellt durch das Symbol 39d, durch die automatisierte Betätigung der dieser Funktion zugeordneten Funktionstaste 38d wiedergegeben.

**Bezugszeichenliste**

| | | | |
|---|---|---|---|
| 1 | Arbeitsmaschine | 33a | Anzeigeelement |
| 2 | Traktor | 33b | Anzeigeelement |
| 3 | Arbeitsgerät | 34 | Symbol Funktion |
| 4 | Zugmaul | 35 | Symbol Wegeventil |
| 5 | Dreipunktanbau | 36 | Symbol Bedienelement |
| 6 | Antriebsstrang | 37 | Durchflussanzeige |
| 7 | Elektrische Leitung | 37a | Anzeigeelement |
| 8 | Hydraulikleitung | 37b | Anzeigeelement |
| 9 | Zapfwelle | 38a | Funktionstaste |
| 10 | Erstes Kupplungsteil | 38b | Funktionstaste |
| 11 | Zweites Kupplungsteil | 38c | Funktionstaste |
| 12 | Fahrerstand | 38d | Funktionstaste |
| 13 | Bedienelement | 39a | Symbol Teilfunktion |
| 13a | Schalter | 39b | Symbol Teilfunktion |
| 13b | Drehregler | 39c | Symbol Teilfunktion |
| 14 | Display | 39d | Symbol Teilfunktion |
| 15 | Joystick | | |
| 16 | Ein- und Ausgabemittel | | |
| 17 | Bedieneinheit | | |
| 18 | Steuereinrichtung | | |
| 19 | Geräteschnittstelle | | |
| 20 | Datenspeicher | | |
| 21 | Druckmittelquelle | | |
| 22 | Steuerungsvorrichtung | | |
| 23 | Signalleitung | | |
| 24 | Hydraulikleitung | | |
| 30 | Symbol | | |
| 31 | Symbol Wegeventil | | |
| 32 | Symbol Bedienelement | | |
| 33 | Durchflussanzeige | | |

## Patentansprüche

1. Landwirtschaftliche Arbeitsmaschine (1, 2) mit einem hydraulischen Steuerungssystem, welches Ventile der Arbeitsmaschine (1, 2) ansteuert, denen jeweils Maschinenanschlüsse (10) zugeordnet sind, an die zumindest ein Arbeitsgerät (3) mit Gegenanschlüssen (11) zur Ansteuerung eines hydraulisch betätigten Verstellelementes anschließbar ist, sowie mit einer Bedieneinheit (17), die Ein- und Ausgabemittel (16) umfasst und die mit dem hydraulischen Steuerungssystem signaltechnisch verbunden ist, wobei das hydraulische Steuerungssystem derart ausgebildet ist, dass jeweils einem Ventil unmittelbar eine hydraulische Funktion des zumindest einen angeschlossenen Arbeitsgerätes (3), die durch das Verstellelement ausführbar ist, sowie zumindest ein Bedienelement (13) der Bedieneinheit (17) zugeordnet ist, wobei diese Zuordnungen abrufbar in einem Datenspeicher (20) der Arbeitsmaschine (1, 2) hinterlegt sind, wobei das Steuerungssystem dazu eingerichtet ist, die Zuordnungen in Abhängigkeit von Funktionsmerkmalen des angeschlossenen Arbeitsgerätes (3) vorzunehmen, wobei das Steuerungssystem dazu eingerichtet ist, für ein Anbaugerätemodell des angeschlossenen Arbeitsgerätes (3) im Datenspeicher (20) hinterlegte spezifische Sequenzen, die landwirtschaftliche Prozessschritte durch zeit- und/oder wegabhängige Leistungsverläufe definieren, auszuführen, wobei das Steuerungssystem dazu eingerichtet ist, die zeit- und/oder wegabhängigen Leistungsverläufe einer hinterlegten Sequenz durch Eingaben, die von der Bedieneinheit (17) empfangen werden, zu manipulieren,
**dadurch gekennzeichnet, dass**
das Steuerungssystem dazu eingerichtet ist, eine Sequenz für ein Arbeitsgerät (3) anhand von durch die Bedieneinheit (17) übermittelte Eingaben aufzuzeichnen und im Datenspeicher (20) abrufbar zu hinterlegen.

2. Landwirtschaftliche Arbeitsmaschine (1, 2) nach Anspruch 1, **dadurch gekennzeichnet, dass** das Steuerungssystem dazu eingerichtet ist, die hinterlegten Zuordnungen eines angeschlossenen Arbeitsgerätes (3) durch Eingaben, die von der Bedieneinheit (17) an eine Steuerungsvorrichtung (22) übermittelt werden, zu manipulieren.

3. Landwirtschaftliche Arbeitsmaschine (1, 2) nach einem der vorangehenden Ansprüche, **dadurch gekennzeichnet, dass** die Bedieneinheit (17) dazu eingerichtet ist, die jeweilige von dem Steuerungssystem vorgenommene Zuordnung der hydraulischen Funktion durch ein Symbol (30, 34) zu visualisieren.

4. Landwirtschaftliche Arbeitsmaschine nach einem der vorangehenden Ansprüche, **dadurch gekennzeichnet, dass** die Bedieneinheit (17) dazu eingerichtet ist, eine dem jeweiligen Bedienelement (13, 15) zugeordnete Teilfunktion durch ein Symbol (39a, 39b, 39c, 39d) zu visualisieren.

5. Landwirtschaftliche Arbeitsmaschine (1, 2) nach einem der vorangehenden Ansprüche, **dadurch gekennzeichnet, dass** das Steuerungssystem dazu eingerichtet ist, eine Zuordnung einer hydraulischen Funktion zu einem Ventil und zumindest eines Bedienelementes (13, 15) zu einem Ventil in Abhängigkeit von durch die Bedieneinheit (17) empfangene Eingaben durchzuführen.

6. Landwirtschaftliche Arbeitsmaschine (1, 2) nach einem der vorangehenden Ansprüche, **dadurch gekennzeichnet, dass** das Steuerungssystem dazu eingerichtet ist, bei Auswahl eines angeschlossenen Arbeitsgeräts (3) durch eine Eingabe mittels der Bedieneinheit (17) einen Dialog zu eröffnen, welcher die für das angeschlossene Arbeitsgerät (3) hinterlegten Zuordnungen durch das Ausgabemittel (16) der Bedieneinheit (17) zur Verifizierung ausgibt.

7. Landwirtschaftliche Arbeitsmaschine (1, 2) nach einem der vorangehenden Ansprüche, **dadurch gekennzeichnet, dass** das Steuerungssystem dazu eingerichtet ist, durch eine mittels der Bedieneinheit (17) getätigte Eingabe einen Dialog zu eröffnen, durch welchen die Arbeitsgeräteklasse des angeschlossenen Arbeitsgerätes (3) individuell erfasst wird und die Zuordnung einer hydraulischen Funktion zu einem Ventil sowie die Zuordnung zumindest eines Bedienelements (13, 13a, 13b, 15) zu diesem Ventil durchgeführt wird.

8. Verfahren zum Betreiben einer landwirtschaftlichen Arbeitsmaschine (1, 2) mit einem hydraulischen Steuerungssystem, durch welches Ventile der Arbeitsmaschine (1, 2) angesteuert werden, denen jeweils Maschinenanschlüsse (10) zugeordnet sind, an die zumindest ein Arbeitsgerät (3) mit Gegenanschlüssen (11) zur Ansteuerung eines hydraulisch betätigten Verstellelementes angeschlossen wird, sowie mit einer Bedieneinheit (17), die Ein- und Ausgabemittel (16) umfasst und die mit dem Steuerungssystem signaltechnisch verbunden ist, wobei durch Auswahl eines Arbeitsgerätes (3) jeweils einem Ventil unmittelbar eine hydraulische Funktion des zumindest einen angeschlossenen Arbeitsgerätes (3), die durch das Verstellelement ausgeführt wird, sowie zumindest ein Bedienelement (13, 13a, 13b, 15) der Bedieneinheit (17) zugeordnet wird, wobei diese Zuordnungen aus einem Datenspeicher (20) der Arbeitsmaschine (1, 2) abgerufen werden, wobei das Steuerungssystem die Zuordnungen in Abhängigkeit von Funktionsmerkmalen des angeschlossenen Arbeitsgerätes (3) vornimmt, wobei das Steuerungssystem für ein Anbaugerätemodell des angeschlossenen Arbeitsgerätes (3) im Datenspeicher (20) hinterlegte spezifische Sequenzen, die landwirtschaftliche Prozessschritte durch zeit- und/oder wegabhängige Leistungsverläufe definieren, ausführt, wobei das Steuerungssystem die zeit- und/oder wegabhängigen Leistungsverläufe einer hinterlegten Sequenz durch Eingaben, die von der Bedieneinheit (17) empfangen werden, manipuliert,
**dadurch gekennzeichnet, dass**
das Steuerungssystem eine Sequenz für ein Arbeitsgerät (3) anhand von durch die Bedieneinheit (17) übermittelte Eingaben aufzeichnet und im Datenspeicher (20) abrufbar hinterlegt.

## Claims

1. An agricultural working machine (1, 2) with a hydraulic control system which controls valves of the working machine (1, 2) which are associated with respective machine connections (10), to which at least one implement (3) with mating connections (11) can be attached in order to control a hydraulically actuated adjusting element, as well as with an operating unit (17) which comprises input means and output means (16) and which is connected to the hydraulic control system for the purposes of signalling, wherein the hydraulic control system is constructed in a manner such that a hydraulic function of the at least one attached implement (3) which can be executed by the adjusting element, as well as at least one operating element (13) of the operating unit (17) is directly allocated to a respective valve, wherein these allocations are stored in a data memory (20) of the working machine (1, 2) in a retrievable manner, wherein the control system is configured to implement the allocations as a function of functional features of the attached implement (3), wherein
the control system is configured to execute sequences which are specific to an implement model of the attached implement (3) stored in the data memory (20) and which define agricultural process steps by time-dependent and/or path-dependent performance profiles, wherein the control system is configured to manipulate the time-dependent and/or path-dependent performance profiles of a stored sequence by inputs which are received from the operating unit (17),
**characterized in that** the control system is configured to delineate a sequence for an implement (3) with the aid of inputs transmitted via the operating unit (17) and to store it in the data memory (20) in a retrievable manner.

2. The agricultural working machine (1, 2) according to claim 1, **characterized in that** the control system is configured to manipulate the stored allocations for an attached implement (3) by inputs which are transmitted from the operating unit (17) to a control device (22).

3. The agricultural working machine (1, 2) according to one of the preceding claims, **characterized in that** the operating unit (17) is configured to visualise the respective allocation of the hydraulic function implemented by the control system with a symbol (30, 34).

4. The agricultural working machine according to one of the preceding claims, **characterized in that** the operating unit (17) is configured to visualise a sub-function allocated to the respective operating element (13, 15) with a symbol (39a, 39b, 39c, 39d).

5. The agricultural working machine (1, 2) according to one of the preceding claims, **characterized in that** the control system is configured to carry out an allocation of a hydraulic function to a valve and of at least one operating element (13, 15) to a valve as a function of inputs received via the operating unit (17).

6. The agricultural working machine (1, 2) according to one of the preceding claims, **characterized in that** in the case of selection of an attached implement (3) via an input by means of the operating unit (17), the control system is configured to open a dialogue which outputs the stored allocations for the attached implement (3) via the output means (16) of the operating unit (17) for the purposes of verification.

7. The agricultural working machine (1, 2) according to one of the preceding claims, **characterized in that** the control system is configured to open a dialogue via an input transacted by means of the operating unit (17), by means of which the implement classification of the attached implement (3) is individually detected and the allocation of a hydraulic function to a valve as well as the allocation of at least one operating element (13, 13a, 13b, 15) to this valve is carried out.

8. A method for operating an agricultural working machine (1, 2) with a hydraulic control system via which valves of the working machine (1, 2) are controlled, which are associated with respective machine connections (10), to which at least one implement (3) with mating connections (11) is connected in order to control a hydraulically actuated adjusting element, as well as with an operating unit (17) which comprises input means and output means (16) and which is connected to the control system for the purposes of signalling, wherein, by selecting an implement (3), a hydraulic function of the at least one attached implement (3) which is executed by the adjusting element, as well as at least one operating element (13, 13a, 13b, 15) of the operating unit (17), is directly allocated to a respective valve, wherein these allocations are retrieved from a data memory (20) of the working machine (1, 2), wherein the control system implements the allocations as a function of functional features of the attached implement (3), wherein
the control system executes sequences which are specific for an implement model of the attached implement (3) stored in the data memory (20) and which define agricultural process steps by time-dependent and/or path-dependent performance profiles, wherein the control system manipulates the time-dependent and/or path-dependent performance profiles of a stored sequence by inputs which are received from the operating unit (17),
**characterized in that** the control system delineates a sequence for an implement (3) with the aid of inputs transmitted via the operating unit (17) and stores it in the data memory (20) in a retrievable manner.

## Revendications

1. Machine de travail agricole (1, 2) comprenant un système d'actionnement hydraulique qui active des vannes de la machine de travail agricole (1, 2) auxquelles sont associés respectivement des raccords de machine (10) auxquels peut être raccordé au moins un outil de travail (3) doté de raccords conjugués (11), aux fins d'activer un élément de réglage à actionnement hydraulique, et comprenant une unité de commande (17) qui comporte des moyens d'entrée et de sortie (16) et qui est reliée au système d'actionnement hydraulique sur le plan de la technique des signaux, sachant que le système d'actionnement hydraulique est conçu de manière à ce que soient directement associés respectivement à une vanne, une fonction hydraulique de l'outil de travail (3) raccordé, au nombre d'au moins un, qui peut être exécutée par l'élément de réglage, et au moins un élément de commande (13) de l'unité de commande (17), lesdites associations étant sauvegardées dans une mémoire de données (20) de la machine de travail agricole (1, 2), de manière à pouvoir les extraire, sachant que le système d'actionnement est conçu pour effectuer les associations en fonction de caractéristiques fonctionnelles de l'outil de travail (3) raccordé, le système d'actionnement étant conçu pour exécuter des séquences spécifiques pour un modèle d'outil attelé de l'outil de travail (3) raccordé, qui sont sauvegardées dans la mémoire de données (20) et définissent des étapes de processus agricoles par des évolutions de puissance dépendant du temps et/ou du trajet, le système d'actionnement étant conçu pour manipuler les évolutions de puissance, dépendant du temps et/ou du trajet, d'une séquence sauvegardée, par le biais d'entrées qui sont reçues depuis l'unité de commande (17),
**caractérisée en ce que**
le système d'actionnement est conçu pour enregistrer une séquence pour un outil de travail (3), à l'aide d'entrées transmises par l'unité de commande (17), et pour la sauvegarder dans la mémoire de données (20), de manière à pouvoir l'extraire.

2. Machine de travail agricole (1, 2) selon la revendication 1, **caractérisée en ce que** le système d'actionnement est conçu pour manipuler les associations sauvegardées d'un outil de travail (3) raccordé, par le biais d'entrées qui sont transmises par l'unité de commande (17) à un dispositif d'actionnement (22).

3. Machine de travail agricole (1, 2) selon une des revendications précédentes, **caractérisée en ce que** l'unité de commande (17) est conçue pour visualiser par un symbole (30, 34) l'association respective de la fonction hydraulique, effectuée par le système d'actionnement.

4. Machine de travail agricole selon une des revendications précédentes, **caractérisée en ce que** l'unité de commande (17) est conçue pour visualiser par un symbole (39a, 39b, 39c, 39d) une fonction partielle associée à l'élément de commande (13, 15) respectif.

5. Machine de travail agricole (1, 2) selon une des revendications précédentes, **caractérisée en ce que** le système d'actionnement est conçu pour effectuer une association d'une fonction hydraulique à une vanne et d'au moins un élément de commande (13, 15) à une vanne, en fonction d'entrées reçues par le biais de l'unité de commande (17).

6. Machine de travail agricole (1, 2) selon une des revendications précédentes, **caractérisée en ce que** le système d'actionnement est conçu pour procéder, lors de la sélection d'un outil de travail (3) raccordé, par une entrée via l'unité de commande (17), à l'ouverture d'un dialogue qui délivre les associations sauvegardées pour l'outil de travail (3) raccordé, par le biais du moyen de sortie (16) de l'unité de commande (17), à des fins de vérification.

7. Machine de travail agricole (1, 2) selon une des revendications précédentes, **caractérisée en ce que** le système d'actionnement est conçu pour ouvrir un dialogue du fait d'une entrée effectuée à l'aide de l'unité de commande (17), lequel dialogue permet de détecter individuellement la catégorie d'outil de travail de l'outil de travail (3) raccordé et d'effectuer l'association d'une fonction hydraulique à une vanne ainsi que l'association d'au moins un élément de commande (13, 13a, 13b, 15) à ladite vanne.

8. Procédé pour faire fonctionner une machine de travail agricole (1, 2) comprenant un système d'actionnement hydraulique par lequel sont activées des vannes de la machine de travail agricole (1, 2) auxquelles sont associés respectivement des raccords de machine (10) auxquels peut être raccordé au moins un outil de travail (3) doté de raccords conjugués (11), aux fins d'activer un élément de réglage à actionnement hydraulique, et comprenant une unité de commande (17) qui comporte des moyens d'entrée et de sortie (16) et qui est reliée au système d'actionnement hydraulique sur le plan de la technique des signaux, sachant que la sélection d'un outil de travail (3) a pour effet que sont directement associés respectivement à une vanne, une fonction hydraulique de l'outil de travail (3) raccordé, au nombre d'au moins un, qui est exécutée par l'élément de réglage, et au moins un élément de commande (13, 13a, 13b, 15) de l'unité de commande (17), lesdites associations étant extraites d'une mémoire de données (20) de la machine de travail agricole (1, 2), sachant que le système d'actionnement effectue les associations en fonction de caractéristiques fonctionnelles de l'outil de travail (3) raccordé, le système d'actionnement exécutant des séquences spécifiques pour un modèle d'outil attelé de l'outil de travail (3) raccordé, lesquelles séquences sont sauvegardées dans la mémoire de données (20) et définissent des étapes de processus agricoles par des évolutions de puissance dépendant du temps et/ou du trajet, sachant que le système d'actionnement manipule les évolutions de puissance, dépendant du temps et/ou du trajet, d'une séquence sauvegardée, par le biais d'entrées qui sont reçues depuis l'unité de commande (17),
**caractérisée en ce que**
le système d'actionnement enregistre une séquence pour un outil de travail (3), à l'aide d'entrées transmises par l'unité de commande (17), et la sauvegarde dans la mémoire de données (20), de manière à pouvoir l'extraire.
